Europäisches Patentamt

(19) European Patent Office

Office européen des brevets

(11) Publication number: **0 238 231**
**A2**

## (12) EUROPEAN PATENT APPLICATION

(21) Application number: **87301810.5**

(22) Date of filing: **02.03.87**

(51) Int. Cl.⁴: **F16F 15/12**

(30) Priority: **18.03.86 US 841126**

(43) Date of publication of application:
**23.09.87 Bulletin 87/39**

(84) Designated Contracting States:
**DE ES FR GB IT SE**

(71) Applicant: **Borg-Warner Automotive, Inc.**
**3001 W. Big Beaver Road**
**Troy Michigan 48084(US)**

(72) Inventor: **Lamarche, Paul Emile**
**47991 Burton**
**Utica Michigan 48087(US)**

(74) Representative: **Williams, Trevor John et al**
**J.A. KEMP & CO. 14 South Square Gray's Inn**
**London WC1R 5EU(GB)**

(54) Long travel damper with dynamic spring dividers.

(57) A long travel damper assembly (10) operatively connecting torque input (12) and output members including a piston plate acting as a clutch plate for torque input from a vehicle engine, a hub barrel (31) connected to a transmission input shaft and having a hub plate (34) secured thereto with circumferentially spaced radial arms extending outwardly from the periphery thereof, damper springs between adjacent hub arms, and generally wedge-shaped individual spring dividers having rollers positioned at their outer edges riding in an arcuate channel of a housing for the damper; the housing being connected to the torque input means and having inwardly offset drive straps (19) in the path of the damper springs and normally axially aligned with the hub arms.

Fig. 1

## LONG TRAVEL DAMPER WITH DYNAMIC SPRING DIVIDERS

It is well known to use a combination spring and friction-type vibration damper in a conventional vehicle friction clutch ahead of a manual transmission for the purpose of neutralizing any torsional vibrations emanating from the vehicle engine which would otherwise cause undesirable characteristics, e.g. impact loads, pulsations, noises, etc. in the transmission and driveline during operation of the vehicle.

Where an automatic transmission having a hydraulic torque converter is positioned between the vehicle engine and the transmission, the torsional vibrations from the engine are hydraulically dampened in the torque converter, obviating the need for a vibration damper. However, with the addition of a lock-up clutch in the torque converter to enhance the efficiency of the transmission by providing a direct connection between the engine and the transmission input shaft at higher vehicle speeds, vibrations again become a problem requiring a vibration damper in the lock-up clutch assembly.

Previous vibration damper assemblies have not been effective in the torque converter lock-up clutch due to the limited travel before the damper springs bottom out. Also, rubbing friction can become a problem in a vibration damper assembly. A number of patents have recently issued to applicant disclosing an extended range of travel in the damper assembly to provide adequate damping for torsional vibrations present in the newer engine-automatic transmission combinations. The present invention provides an effective vibration damper assembly for use in manual clutches or torque converter lock-up clutch assemblies where normal rubbing friction cannot be tolerated.

The present invention relates to a long travel vibration damper of a streamlined and compact design adapted to fit within the limited space between the turbine of a torque converter and the converter housing containing the friction surface cooperating with a friction surface on a piston plate for the clutch and damper assembly. The damper assembly includes a torque input means located in the converter housing, a damper housing secured to the torque input means and having integral drive straps a hub plate located within the housing and connected to the turbine hub, several radial arms circumferentially spaced on the hub plate, one or more dynamic spring dividers between adjacent hub arms in the housing having roller means in each divider adapted to ride in an arcuate channel formed in the housing, and damper springs between the hub arms and spring dividers.

The present invention also relates to a long travel vibration damper for a torque converter lock-up clutch to be used where low hysteresis is required in spring dividers and wherein a hub plate has a plurality of circumferentially equally spaced radial hub arms, a housing encompassing the hub plate and having inwardly offset torque input members or straps axially aligned with each hub arm, a plurality of damper springs and a plurality of spring dividers, each divider receiving one or more rollers which ride in a channel formed in the outer edge of the housing; the damper springs generally urging the dividers outwardly so that their associated rollers engage the housing channel.

Further objects of the present invention are to provide a construction of maximum simplicity, efficiency, economy and ease of assembly and operation, and such further objects, advantages and capabilities as will later more fully appear and are inherently possessed thereby.

Figure 1 is a rear elevational view with portions broken away of a long travel damper assembly of the present invention.

Figure 2 is a cross sectional view of the damper assembly taken on the irregular line 2-2 of Figure 1.

Figure 3 is an enlarged cross sectional view of a spring divider with the roller engaging the housing in elevation.

Figure 4 is a rear elevational view with portions broken away of a second embodiment of vibration damper assembly.

Figure 5 is a cross sectional view of the assembly taken on the irregular line 5-5 of Figure 4.

Figure 6 is an enlarged partial cross sectional view of the spring divider of Figures 4 and 5 with a roller in elevation

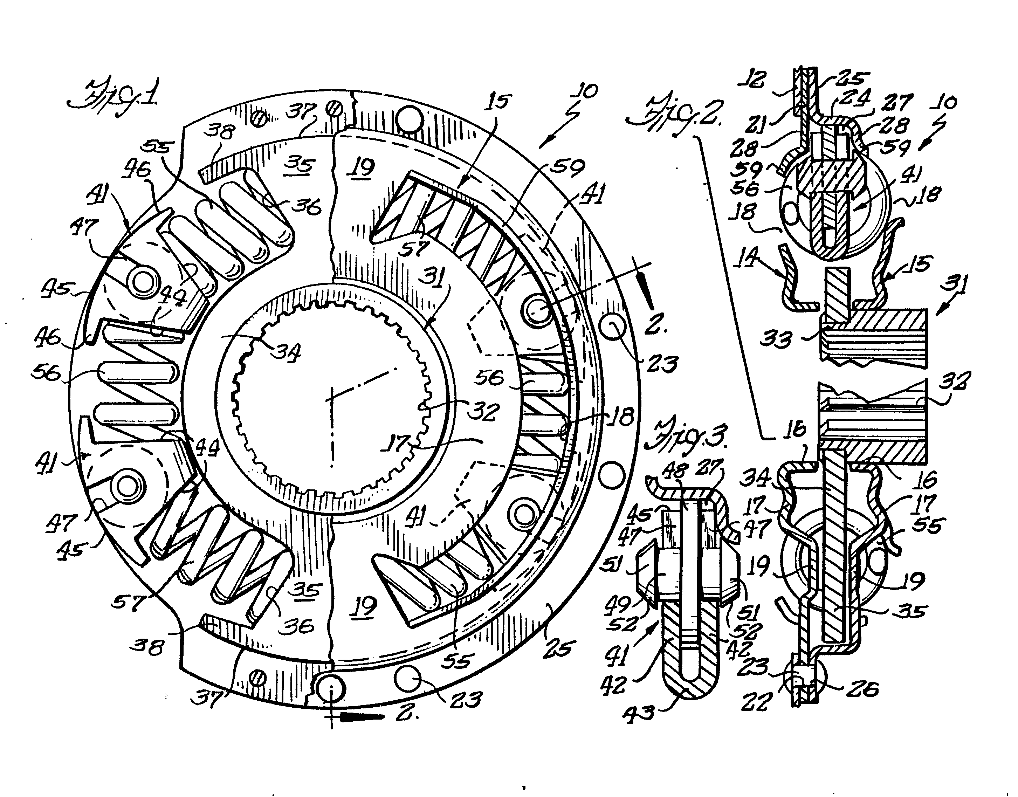

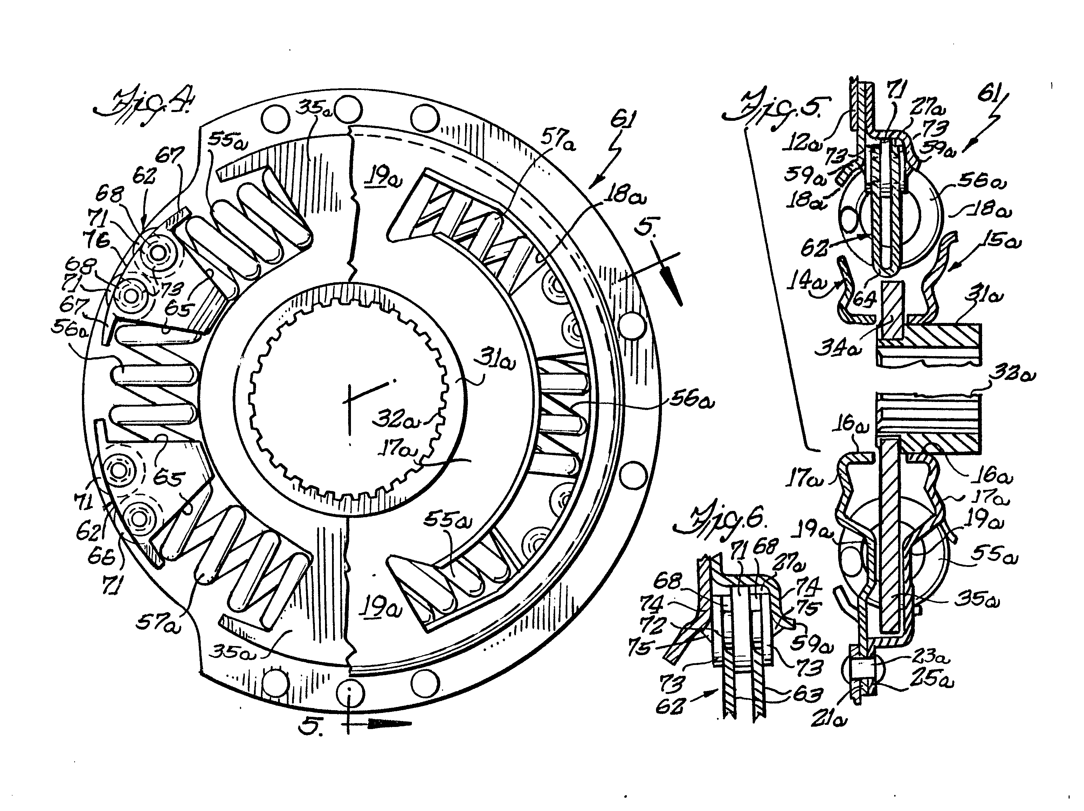

Referring more particularly to the disclosure in the drawings wherein are shown illustrative embodiments of the present invention, Figures 1 through 3 disclose a vibration damper assembly 10 utilized in the spacing between a torque converter housing operatively connected to the drive shaft for a vehicle engine and a turbine of the torque converter (not shown). As is conventional, the torque converter housing is connected to an impeller (not shown) for the torque converter which, with the turbine, provides a fluid coupling between the vehicle engine and an automatic transmission. The housing is provided with an annular clutching surface adapted to be engaged by an annular friction ring secured to an annular piston plate 12, such as shown in U. S. Patent No. 4,441,595, a portion of which is shown in Figure 2, which may have outer and inner flanges (not shown) for axial sliding reciprocatory movement on a bearing surface of the housing.

Secured to the piston plate 12 is an annular damper housing consisting of a pair of oppositely dished housing plates 14,15; each plate having an inturned inner flange 16, and outwardly bulged central portion 17 with elongated arcuate slots 18 separated by two or more inwardly offset drive straps 19. The periphery 21 of plate 14 provides a flange with spaced openings 22 to receive rivets 23, and the periphery of plate 15 includes an axially extending portion 24 extending to a radial flange 25 abutting flange 21 of plate 14. The flange 25 contains openings 26 for the rivets 23 to secure the plates together and secure the housing to the piston plate 12. A channel 27 is formed in the housing defined by the axial portion 24 and the edges 28 of the central portions 17 for a purpose to be later described.

A hub barrel 31 is received within the inner flanges 16,16 and has a central passage with internal splines 32 receiving therein the splined end of a transmission input shaft (not shown). An annular hub plate 34 is received and swaged onto a reduced splined end 33 of the barrel and is provided with at least two radially extending hub arms 35 normally axially aligned with the drive straps 19. Each hub arm 35 includes diverging edges 36 terminating in an arcuate edge 37 having circumferentially oppositely extending fingers 38 received in the housing channel 27.

Located between each pair of adjacent hub arms 35 is a pair of spring dividers 41,41 movable in the housing 13 between sets of damper springs 55, 56 and 57. Each divider 41, as seen in Figure 3, includes generally parallel sides 42,42 joined by a U-shaped base 43; each side having diverging edges 44,44 terminating in an arcuate outer edge 45 with circumferentially oppositely extending fingers 46 (Figure 1). Opening into the arcuate edge 45 of each side is a centrally located generally U-shaped notch 47 receiving a shank portion of a central axle 49 for a roller 48 located between the sides 42,42; the axle having opposite enlarged ends 51,51 positioned outside of the sides and provided with tapered or conical surfaces 52,52.

A set of three damper springs 55, 56 and 57 are positioned between adjacent hub arms 35 with the spring dividers 41,41 being located between springs 55 and 56 and springs 56 and 57. Action of the damper compression springs on the diverging edges 44 of each divider 41 urge the dividers radially outwardly so that the roller 48 engages the axial portion 24 of the channel 27 in the housing; the conical surfaces 52 of the enlarged axle ends being closely adjacent curved surfaces 59 of the plates 14,15 defining the outer edges of the arcuate slots 18. As a consequence of the springs acting on the dividers 41 and the rollers 48 moving in the channel 27, normal rubbing friction between the parts is substantially eliminated during the damping action. Although shown as single compression springs, each damper spring may be a nested set of two or three concentric springs, and the springs 55, 56 and 57 may have differing spring characteristics depending on the damping characteristics desired.

In operation, the piston plate 12 and the damper assembly 10 rotate with the torque converter turbine at low rotational speeds and, as the engine speed increases, the rotational speed of the impeller causes greater fluid circulation to the turbine with increased fluid pressure in the converter. When the impeller rotational speed reaches a predetermined level, the increased fluid pressure in the converter causes axial movement of the piston plate 12 so that the friction surfaces engage and the housing now directly drives the piston plate 12 and turbine through the clutch without the inherent slippage of the fluid coupling. Rotation of the piston plate causes the damper housing to rotate so that each drive strap 19 acts on the damper spring 55, which in turn reacts with the first spring divider 41 to cause compression of the second damper spring 56. Action of spring 56 acts on the second spring divider 41, which in turn, compresses the third spring 57; spring 57 acting on a hub arm 35 to rotate the hub plate 34 and barrel 31 and rotate the transmission input shaft leading to the automatic transmission.

Figures 4 through 6 disclose a second embodiment of vibration damper assembly 61 wherein like parts to those of the first embodiment will have the same reference numeral with the addition of a script a. The assembly includes an annular piston plate 12a, a portion of which is shown in Figure 5, adapted to frictionally engage the interior surface of the torque converter housing. The piston plate is axially slidable under hydraulic pressure from within the torque converter to engage the clutch surfaces. The hub barrel 31a has a splined central passage 32a to receive the splined end of the transmission input shaft, and the hub plate 34a secured to the barrel 31a has a plurality of circumferentially spaced radially outwardly extending hub arms 35a. The housing includes plates 14a,15a, each having an inner flange 16a journalled on the hub barrel, arcuate slots 18a in side walls 17a separated by inwardly offset drive straps 19a, and a peripheral channel 27a adjacent radial flanges 21a and 25a secured to each other and to the piston plate 12a by rivets 23a.

Located between damper springs 55a, 56a and 57a are a pair of dynamic spring dividers 62, each divider having parallel sides 63,63 (Figure 6) joined by a U-shaped base 64 (Figure 5). The sides have diverging edges 65 to be engaged by the damper springs and arcuate outer edges 66 with oppositely extending fingers 67 (Figure 4). Opening into each arcuate edge are a pair of spaced U-shaped notches 68, each notch receiving a shank portion of an axle 72 for a central roller 71 located between the sides 63,63. The axle terminates in enlarged circular surfaces 73 received between the sides 63 and the outer sides 74 of the housing channel 27a. A conical central projection 75 on each end of the axle is closely adjacent to the curved edges 59a of the arcuate slots 18a.

This damper arrangement operates in the same manner as the damper of Figures 1 through 3 to substantially eliminate the rubbing friction normally associated with a vibration damper assembly. Although disclosed for use with a piston plate of a torque converter lock-up clutch, this damper assembly obviously could be incorporated in a friction clutch plate for a manual transmission. Also, although a hub and housing are shown with oppositely disposed hub arms and drive straps, pairs of spring dividers and sets of three damper springs, more than two circumferentially equally spaced hub arms and drive straps may be utilized in this assembly as well as one or more spring dividers between adjacent hub arms and an appropriate number of damper springs.

**Claims**

1. A vibration damper assembly (10) to transmit torque between driving and driven members, comprising a torque input member (12) adapted to engage torque input means, a hub plate (34) and barrel (31) operatively connected to torque output means, said hub plate having at least two circumferentially equally spaced radially extending integral hub arms (35), a damper housing (14,15) secured to said torque input member and having integral inwardly offset drive straps (19) generally axially aligned with said hub arms, a plurality of damper spring sets (55,56,57) interposed between adjacent hub arms (35), and one or more spring dividers (41,41, or 62,62) interposed between adjacent damper springs in a spring set and having roller means (48 or 71) thereon, said housing having a peripheral channel (27) receiving said roller means and the outer edge (45) of each hub arm.

2. A vibration damper assembly as set forth in Claim 1, wherein each spring divider (48 or 71) includes a pair of generally parallel sides (42,42 or 63,63) joined by a U-shaped base (43 or 64), each side having diverging edges (44 or 65) terminating in an arcuate outer edge (45 or 66), each outer edge having at least one U-shaped notch (47 or 68) opening therein to receive said roller means.

3. A vibration damper assembly as set forth in Claim 2, wherein said roller means includes an axle (49 or 72) received in said notches (47 or 68) and a central roller (48 or 71) located between the parallel sides.

4. A vibration damper assembly as set forth in Claim 3, in which said axle (49 or 72) terminates in enlarged ends (51 or 73) outside of said parallel divider sides (42 or 63).

5. A vibration damper assembly as set forth in Claim 4, in which said enlarged axle ends (51) have conical surfaces (52) positioned closely adjacent to interior surfaces (59) of said housing.

6. A vibration damper assembly as set forth in Claim 4, wherein said axle (72) terminates in conical projections (75) beyond the enlarged ends (73) positioned closely adjacent to interior surfaces (59a) of said housing; said enlarged ends being located between said divider sides and said housing.

7. A vibration damper assembly as set forth in Claim 6, wherein each spring divider (62) has a pair of U-shaped notches (68) receiving a pair of roller means.

8. A vibration damper assembly as set forth in Claim 1, wherein the diverging edges (44 or 65) of each spring divider (48 or 71) are engaged by adjacent damper springs (55,56,57), whereby said springs urge the dividers (48 or 71) away from the hub plate (34 or 34a) towards said housing channel (27 or 27a).

Fig.1

Fig.2

Fig.3

Fig.5.

Fig.6.

Fig.4.